# NOUVEAU FASCICULE DE BREVET EUROPEEN

(11) **EP 1 968 779 B2**
(45) Date de publication et mention de la décision concernant l'opposition: **29.01.2020**
(45) Mention de la délivrance du brevet: 20.05.2009
(21) Numéro de dépôt: 06831349.3
(22) Date de dépôt: 17.11.2006
(51) Int. Cl.: B29C 65/00, B29C 65/50, F17C 13/00

(54) **PROCÉDÉ DE COLLAGE D'UNE BANDE DE NAPPE SOUPLE SUR UN SUPPORT**
VERFAHREN ZUR KLEBEVERBINDUNG EINES FLEXIBLEN TEXTILSTOFFSTREIFENS MIT EINEM SUBSTRAT
METHOD OF ADHESIVELY BONDING A STRIP OF FLEXIBLE FABRIC TO A SUBSTRATE

(30) Priorité: 18.11.2005 FR 0511721
(43) Date de publication de la demande: 17.09.2008
(73) Titulaire: GAZTRANSPORT ET TECHNIGAZ, 78470 Saint-Rémy-lès-Chevreuse (FR)
(72) Inventeur: MERCIER, Pascale, F-44880 Sautron (FR); LANVIN, Pascal, F-44350 Guerande (FR); LENHARDT, Edouard, F-44100 Nantes (FR)
(74) Mandataire: Loyer & Abello
(86) Numéro de dépôt international: PCT/FR2006/051187
(87) Numéro de publication internationale: WO 2007/057614

(56) Documents cités:
- WO-A1-2007/052961
- FR-A- 2 822 814
- FR-A- 2 822 815
- FR-A- 2 868 060
- FR-A1- 2 822 815
- FR-A1- 2 868 060
- FR-A1- 2 870 325
- FR-A1- 2 873 308
- KR-A- 20050 015 840
- Colle époxides bi-composant commercialisées par Master Bond.
- 'Le collage structural moderne' de P. Couvrat (1992)
- 'Le collage industriel' de P.Cognard et F Pardos (1981)
- Bondship Project guidelines
- 'Review of surface characterisation techniques for adhesive bonding' (2002)
- 'Review of adhesive bonding assembly processes ..' (2003)
- Fiches techniques de colles polyuréthane
- Cass Com, n°06-12487 (2007)
- TGI Paris (juin 1999)
- Opinion de brevetabilité de l'ISA (15/3/2007)
- Réponse du mandataire CAT (14/9/2007)
- Rapport préliminaire international (18/2/2008)
- Extrait de 'Quand le méthane prend la mer' (1998)
- Attestation Barquins (2010)
- CV Barquins & Liste de publications Barquin & Rapport Barquin
- Extrait de 'Pratique du collage industriel' (1992)
- Extrait de 'guide collage' (1978)
- Extrait 'Handbook of adhesives and sealants' (1990)
- 'Epoxy adhesive formulations' (2006)
- Extrait de 'Handbook of adhesives' (1990)
- Notice technique
- Extrait des 'Techniques de l'ingénieur' (2003)
- Extrait de 'les colles et adhésives et leurs emplois industriels' (1979)
- Extrait de '3M Aerospace product grid' (2002)
- Extrait de 'Engineered materials handbook' (1990)
- Extrait de 'Handbook of adhesives and sealants' (2005)
- Attestation Duncan (2010) & CV Duncan & Rapport Duncan
- Handbook of adhesive bonding (1973)
- 'Adhesives Handbook' (1970)
- 'Structural Adhesive joints in Engineering' (1984)
- 'Adhesive materials, their properties and usage' (1964)
- 'Standard practice for preparation of surfaces of plastic.' (1992)
- Standard guide to preparation of metal surfaces of adhesive bonding' (1990)
- 'Standard test method for peel adhesion of pressure sensitive tape' (2003)
- 'Rate and temperature dependant properties of a flexible adhesive' (2000)
- 'A review of adhesive bonding..' (2003)
- 'Characterisation of flexible adhesives for design' (2001)
- 'Preparation and testing of adhesive joints' (2001)
- 'The effect of surface conditions when bonding with epoxy adhesive' (1969)
- 'The use of taguschi statistical analysis..' (1996)
- 'The durability of some epoxide adhesive-bonded joints..' (1980)
- 'Cold setting adhesives for repair purposes' (1982)
- 'Structural/multi-resistant bonding' (1994)
- 'Users guide to adhesives' (2001)
- 'Data sheed for cold to warm-curing epoxy' (2004)
- 'Bonding adhesives textbook' (2004)
- ADH 5 report 2 & ADH 5 report 3 & ADH 5 report 4 & ADH 5 report 5 & ADH 5 report 6 & ADH 5 report 7 & ADH 5 report 8 & ADH 5 report 9
- Norme ISO 4587
- Correspondances entre GTT et CAT
- Rapport d'essais GTT
- CV Gomart

## Description

La présente invention concerne un procédé de collage d'une bande de nappe souple sur au moins un support souple ou rigide, cette nappe et ce support comprenant au moins une fine feuille métallique, par exemple en aluminium, collée en sandwich entre deux tissus de fibres de verre, un liant pouvant assurer la cohésion entre les tissus de fibres de verre et l'aluminium.

Ce procédé de collage est plus particulièrement destiné à être mis en oeuvre lorsque lesdites bandes et supports sont soumis à des contraintes importantes, notamment des contraintes thermiques et/ou des efforts de traction.

Un exemple particulier de cas où de tels bandes et supports sont soumis à ce genre de traction est lorsqu'ils sont utilisés pour la réalisation de la paroi isolante et étanche d'une cuve, intégrée dans une structure porteuse, par exemple la coque d'un navire.

Ces cuves sont par exemple celles utilisées sur les navires de transport de gaz liquéfié. Elles doivent être parfaitement étanches et suffisamment isolantes pour contenir du gaz liquéfié à basse température et en limiter l'évaporation.

Ces parois sont constituées de deux membranes d'étanchéité successives, l'une primaire en contact avec le produit contenu dans la cuve et l'autre secondaire disposée entre la membrane primaire et la structure porteuse, ces deux membranes étant alternées avec deux barrières thermiquement isolantes.

On connaît ainsi des parois de cuve constituées d'une isolation primaire en mousse associée à une membrane primaire en inox et d'une isolation secondaire en mousse associée à une membrane secondaire souple ou rigide. Cette membrane secondaire comporte au moins une fine feuille métallique continue, par exemple en aluminium, collée en sandwich entre deux tissus de fibres de verre, un liant pouvant assurer la cohésion entre les tissus de verre et l'aluminium.

L'isolation secondaire est disposée du côté coque du navire.

Il existe également des parois comprenant un isolant primaire en mousse, associé à une membrane réalisée dans un matériau connu sous la dénomination commerciale "INVAR", et un isolant secondaire en mousse, associé à une membrane secondaire souple ou rigide comportant au moins une fine feuille métallique, par exemple en aluminium, collée en sandwich entre deux tissus de fibres de verre, un liant pouvant assurer la cohésion entre les tissus de verre et l'aluminium. L'"INVAR" désigne un acier à 36% de nickel stable thermiquement entre moins 200°C et plus 400°C.

Les parois isolantes et étanches de ces cuves sont réalisées à partir d'un ensemble de panneaux préfabriqués comportant successivement, entre deux plaques rigides, l'isolant thermique secondaire, la membrane d'étanchéité secondaire et l'isolant thermique primaire. La membrane d'étanchéité primaire est ensuite montée sur l'ensemble des panneaux préfabriqués recouvrant la structure porteuse du navire.

De façon courante, chaque panneau préfabriqué a la forme générale d'un parallélépipède rectangle, l'élément d'isolation primaire et l'élément d'isolation secondaire ayant respectivement, vus en plan, la forme d'un premier rectangle et d'un deuxième rectangle dont les côtés sont sensiblement parallèles, les longueurs et/ou la largeur du premier rectangle étant inférieure à celles du second rectangle, afin de ménager un rebord périphérique.

La continuité de la barrière isolante secondaire est réalisée en insérant un matériau thermiquement isolant entre les deux panneaux adjacents.

Les rebords périphériques de panneaux préfabriqués adjacents et les parois latérales des éléments d'isolation primaire définissent des couloirs, pouvant s'étendre sur toute la longueur, largeur ou hauteur de la cuve.

Les couloirs sont comblés pour assurer la continuité de l'étanchéité formée par les panneaux, avant la pose de la membrane primaire. La continuité de la barrière isolante primaire est réalisée en insérant des pavés dans les couloirs. Toutefois, pour assurer la continuité de l'étanchéité de la membrane secondaire, au niveau de la jonction entre deux panneaux, lesdits rebords périphériques sont recouverts, avant la mise en place desdits pavés, d'une bande de nappe souple, comportant au moins une fine feuille métallique continue.

Le montage de ces panneaux nécessite des modes opératoires très stricts et une grande précision de montage, afin de garantir l'isolation thermique et l'étanchéité de la cuve.

Le collage de la bande de nappe souple et l'étanchéité ainsi réalisée entre deux panneaux adjacents doivent être particulièrement précis, afin de répondre aux différentes contraintes mécaniques et de tenue dans le temps, subies directement par l'assemblage des panneaux entre eux.

En effet, les cuves de tels navires sont soumises à de nombreuses contraintes :
- la mise en froid de la cuve avant son remplissage à des températures très basses, par exemple de l'ordre de -160°C pour du méthane, voire voisines de -170°C, qui crée des déformations au niveau de la paroi de la cuve par contraction thermique des matériaux,
- le navire en navigation est soumis à de nombreuses contraintes telles que la houle, ce qui provoque des déformations de sa coque et donc des parois de la cuve par répercussion, et
- les mouvements de la cargaison, qui créent des contraintes de surpression ou contre-pression sur les parois de la cuve.

Ainsi, les zones de jonction entre panneaux adjacents sont des zones soumises à diverses contraintes de traction et elles doivent donc présenter une bonne tenue mécanique dans le temps, afin de ne pas rompre la continuité de la barrière d'étanchéité secondaire.

On connaît déjà d'après l'état de la technique, un procédé de réalisation de l'étanchéité secondaire au niveau des rebords périphériques de panneaux préfabriqués, qui consiste à :
- effectuer un dépoussiérage de la zone de collage,
- déposer de la colle de type époxy ou polyuréthanne sur les rebords des panneaux, soit à la spatule après avoir prélevé un volume de ladite colle pesé au préalable en fonction de la surface à encoller, soit avec un dispositif de dépose de colle, tel que celui décrit dans la demande de brevet français dont le numéro de dépôt est FR 2004 0051648,
- lisser le film de colle,
- dérouler une bande souple continue, disponible sous forme de rouleaux, sur les rebords enduits de colle,
- maroufler la bande souple déposée de manière à éliminer toutes bulles résiduelles,
- dérouler un film de protection, par exemple de type polyane, au-dessus de la bande souple déjà en place, afin de pallier le problème de débordement de colle de la bande souple, et enfin,
- mettre sous pression les bandes collées pendant la durée de polymérisation de la colle, cette durée étant fonction de la température ambiante.

La bande de nappe souple recouverte du film de protection est maintenue sous une pression d'environ 0,1 à 0,2 bar, selon le type de résine et pendant une durée qui est fonction de la température ambiante à laquelle est effectué le collage.

Le tableau 1 ci-après reprend ces paramètres pour une colle de type époxy, bi-composants (à savoir résine et durcisseur).

**TABLEAU 1**

| Température ambiante de travail | 15°C | 20°C | 25°C | 30°C | 35°C | 40°C |
|---|---|---|---|---|---|---|
| Durée de mise en pression (heures) | 12 | 6 | 4 | 3 | 3 | 2,25 |

Le tableau 1 montre les durées de mise en pression de bandes collées en fonction des températures de travail, ces durées de mise en pression étant fonction des temps de polymérisation référencés pour une colle époxy bi-composants résine et durcisseur, selon un ratio durcisseur / résine de l'ordre de 0,55 en masse.

Il apparaît que selon les températures de travail, les temps de polymérisation peuvent être très variables.

Lors de la mise en oeuvre industrielle d'un procédé de collage, celui-ci doit pouvoir être reproductible, or les variations énormes qui existent dans les durées de collage, en fonction de la température ambiante, rendent ceci impossible si le procédé est utilisé dans des conditions où les températures varient beaucoup. Ceci est notamment le cas, lorsqu'un tel procédé de collage est effectué dehors ou à l'intérieur d'un local non chauffé, c'est-à-dire soumis aux variations météorologiques.

Dans le cas particulier de la construction d'un navire de transport de gaz liquéfié, il apparaît donc que ces temps de mise en pression et donc de polymérisation de la colle varient de manière non négligeable selon l'avancement dans le temps de la construction des différentes cuves, c'est-à-dire au cours des saisons.

Une variante du procédé précité est décrite dans la demande de brevet n° de dépôt FR 2004 005179, elle consiste à pré-encoller les bandes souples avant leur mise en place sur la zone de collage.

Un tel procédé est actuellement couramment utilisé dans le milieu industriel de la construction navale pour la construction de navire de transport de gaz liquéfié de type méthaniers.

Cette technique a pour inconvénient de ne pas offrir un collage dont les ruptures sont majoritairement cohésives. En effet des tests de contrôle à -170°C montrent une quantité non acceptable de rupture adhésive, bien que les critères de contraintes à rupture en cisaillement et en traction perpendiculaire soient satisfaits.

Dans la suite de la description, l'expression "rupture adhésive" désigne une rupture du collage qui se produit à l'interface entre la couche de colle et la bande ou le support, tandis que l'expression "rupture cohésive" désigne une rupture de collage qui se produit dans l'épaisseur de la couche de colle.

On connaît enfin d'après le brevet français FR 2 822 815, un dispositif et un procédé pour la réalisation de l'étanchéité secondaire au niveau des rebords périphériques de panneaux préfabriqués. Ce brevet divulgue soit de chauffer d'abord une bande pourvue d'une colle thermofusible pour ramollir cette colle, puis de presser la bande préalablement chauffée pour la coller, soit de presser d'abord la bande pourvue d'une colle polymérisable, puis de chauffer la bande collée pour accélérer la polymérisation de la colle.

Dans la seconde variante, ce dispositif comprend entre autre des moyens de déroulement d'une bande de nappe souple dans le couloir existant entre deux panneaux préfabriqués, des patins chauffants aptes à être appliqués contre la bande souple pour initialiser la réticulation de la colle et des patins de refroidissement aptes à augmenter la viscosité de la colle. Ce dispositif a pour inconvénient d'être complexe et de ne pas remédier aux inconvénients précités. En outre, un tel dispositif ne maintient pas la bande sous pression pendant le chauffage.

L'invention vise à remédier aux inconvénients précités de l'art antérieur.

Elle a notamment pour but de proposer un procédé de collage d'une bande de nappe souple sur au moins un support souple ou rigide, ladite nappe et ledit support comprenant au moins une fine feuille métallique continue, collée en sandwich entre deux tissus de fibres de verre, ce procédé répondant à des objectifs de tenue au froid, de rupture cohésive et de reproductibilité et de durabilité du collage.

L'invention a plus précisément pour but de proposer un tel procédé de collage qui permette une tenue mécanique au froid - au voisinage de - 160°C à - 170°C- d'au moins 3,5 MPa en cisaillement, une résistance à la traction perpendiculaire à froid (-170°C) supérieure à 3 MPa et un faciès de rupture cohésive.

A cet effet, l'invention a pour objet un procédé tel que précité qui comprend les étapes successives de :
- dépoussiérage de la zone de collage,
- dépose uniforme d'un film de colle polymérisable, sur au moins l'une des deux surfaces à coller de la nappe souple et du support,
- lissage dudit film de colle,
- mise en place de la bande de nappe souple sur le support,
- marouflage de la nappe souple déposée, de manière à éliminer toutes bulles résiduelles,
- mise en place sur ladite nappe souple, d'un film de protection contre les débordements de colle sur le pourtour de ladite nappe souple, ce film de protection étant de dimensions supérieures à celles de la nappe souple.

Conformément à l'invention, il comprend ultérieurement une étape de mise sous pression de ladite bande de nappe souple contre le support, au moyen d'une presse, et de chauffage simultané de cette bande pendant au moins une partie de la durée de la mise sous pression.

Grâce à ces caractéristiques de l'invention et notamment à l'association de la mise en pression et du chauffage, on obtient une excellente qualité du collage, une cohésion plus haute et la rupture cohésive attendue et systématique.

Conformément à l'invention, la pression appliquée est comprise entre 50 et 200 mbar, la température de chauffage de la bande collée est comprise entre 50 et 70°C et la durée du chauffage est comprise entre 1 et 7 heures.

De préférence, la pression appliquée est de l'ordre de 100 mbar, la température de chauffage de la bande collée est de l'ordre de 60°C et la durée du chauffage est comprise entre 3 et 4 heures.

Ces paramètres de chauffage combinés à la mise en pression de la bande collée permettent d'optimiser au maximum l'adhésion par l'obtention d'une tenue mécanique à froid à -170°C supérieure à 10 MPa en cisaillement et une résistance à la traction perpendiculaire à froid largement supérieure à 3 MPa et garantissent une reproductibilité et une durabilité du collage avec l'obtention d'une rupture cohésive systématique.

De façon avantageuse, après l'étape de dépoussiérage et avant l'étape de dépose de colle, on procède à la mise en place de rubans adhésifs de protection sur le support, autour de la future zone de collage de la bande de nappe souple, afin de protéger ce dernier de tout débordement excessif de colle.

De préférence, on réalise un traitement plasma de la zone de collage avant l'étape de dépose de colle et après la mise en place des rubans adhésifs de protection lorsque ceux-ci sont utilisés.

Le traitement plasma permet d'effectuer une meilleure préparation de surface, surtout en milieu industriel où les risques de pollution des zones à coller sont élevés, tout en évitant l'utilisation de solvants coûteux et dangereux. Il permet également d'opérer une activation de la surface afin d'augmenter sa mouillabilité et ainsi de permettre une meilleure adhérence de l'adhésif sur la surface.

Selon d'autres caractéristiques avantageuses de l'invention, prises seules ou en combinaison :
- l'étape de dépose de colle est réalisée dans un délai maximum de 3 heures après le début du traitement plasma, ou mieux dans un délai maximum de 90 minutes après le début du traitement plasma ;
- le procédé est réalisé sous une température ambiante contrôlée, comprise entre 20 et 25°C ;
- le procédé est réalisé sous une atmosphère contrôlée avec un taux d'humidité relative au maximum de 60% ;
- le procédé est réalisé en maintenant la température de la colle au moment de son application entre 25 et 30°C ;
- lorsque le collage est effectué à l'aide d'une colle époxy bi-composants, l'étape de mise sous pression et de chauffage de la bande de nappe souple est réalisée au maximum 45 minutes après la dépose de ladite colle ;
- lorsque le collage est effectué à l'aide d'une colle polyuréthanne, l'étape de mise sous pression et de chauffage de la bande de nappe souple est réalisée au maximum 15 minutes après la dépose de ladite colle ;
- le chauffage de la bande de nappe souple collée est stoppé au moins 30 minutes avant la fin de la mise sous pression.
- lorsque la bande de nappe souple est appliquée à cheval sur deux supports adjacents, on effectue la mise sous pression en appliquant une pression supplémentaire continue sur la zone de ladite bande située au dessus de la ligne de jonction entre les deux supports, de façon à créer dans cette zone, une déformation de la bande, qui pénètre dans la zone de jonction et absorbe ainsi les plis apparaissant sur la longueur de ladite bande de nappe souple ;

En effet lors du chauffage d'une bande de grande longueur, par exemple supérieure à 2 m, il apparaît, avec ce procédé, des plis dans la longueur de la bande souple, ce qui est nuisible pour les objectifs du collage à atteindre. En positionnant donc ces bandes souples de grande longueur à cheval sur deux supports adjacents et en appliquant une pression continue au niveau de la jonction, on crée une onde qui entre dans cette zone de jonction et qui ainsi absorbe les plis qui se créent, la colle n'étant pas encore entièrement polymérisée, la bande peut se retendre facilement.

L'association de tous ces paramètres permet de manière préférentielle d'optimiser et de mieux contrôler le collage des bandes de nappe souple comportant au moins une fine feuille métallique continue collée en sandwich entre deux tissus de verre, sur un support souple ou rigide comportant au moins une fine feuille métallique continue collée en sandwich entre deux tissus de verre.

Selon une réalisation avantageuse de l'invention, le procédé précédemment décrit est appliqué à la réalisation de la paroi d'une cuve calorifugée de confinement d'un fluide, tel qu'un gaz liquéfié, intégrée dans la structure porteuse d'un navire, cette paroi étant formée par assemblage d'une pluralité de panneaux préfabriqués dont chacun comprend une membrane d'étanchéité insérée entre deux barrières thermiquement isolantes. Conformément à l'invention, ladite bande de nappe souple assure la continuité de l'étanchéité de ladite membrane d'étanchéité, au niveau de la jonction entre deux panneaux préfabriqués.

La lecture de la description ci-après aidera à la compréhension de l'invention. Cette description, donnée uniquement à titre d'exemple, est faite en référence aux dessins annexés dans lesquels :
- la figure 1 montre les différentes étapes d'un procédé selon l'invention,
- la figure 2 montre des courbes comparatives de tests de rupture en cisaillement de collages, obtenus respectivement selon l'art antérieur et selon l'invention,
- les figures 3 et 4 représentent une éprouvette de test utilisée lors des expériences représentées sur la figure 2, respectivement en vue de côté et en vue de dessus.

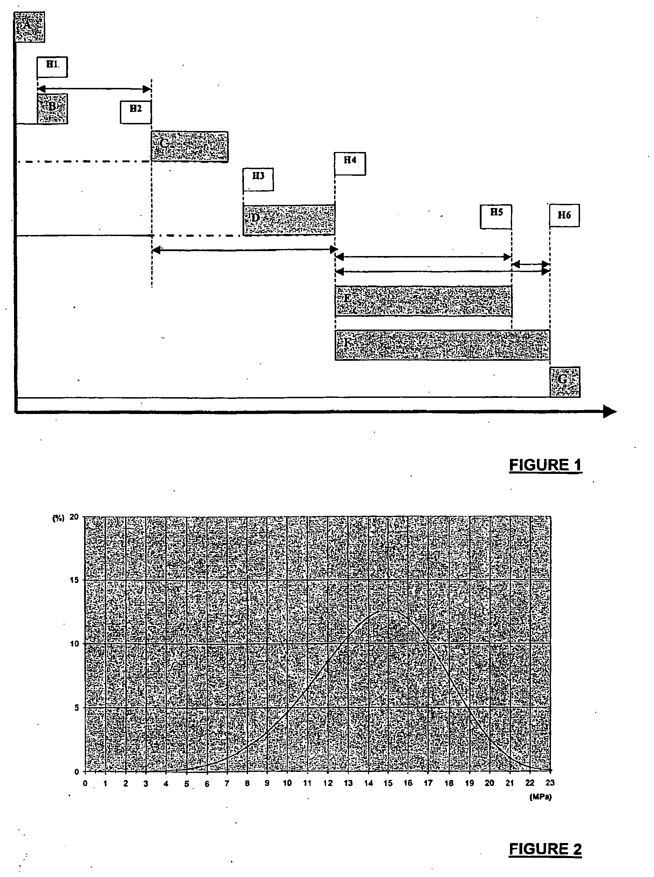

La figure 1 représente les différentes étapes dans le temps d'un procédé selon l'invention. Selon cette réalisation tous les paramètres sont optimisés pour aboutir à un collage présentant une tenue mécanique optimum et dont les ruptures sont systématiquement cohésives.

On commence par amener la zone de travail, si ce n'est pas déjà le cas, à une température comprise entre 20 et 25°C et à une hygrométrie inférieure à 60% et de préférence de l'ordre de 50%. Ces paramètres de température et d'hygrométrie seront contrôlés tout au long de la mise en oeuvre du procédé de collage des bandes de nappe souple.

On va maintenant décrire, en faisant référence à la figure 1, un mode particulier de réalisation du procédé conforme à l'invention.

Celui-ci débute par l'étape A de dépoussiérage, par aspiration par exemple, de manière à assurer une zone de collage totalement propre, sans éléments potentiellement polluants pour le collage à venir.

Le dépoussiérage étant terminé, des rubans adhésifs de protection sont disposés sur les bords de la zone de collage.

Ensuite débute à la référence de temps H1, l'étape B de traitement plasma afin d'assurer doublement la propreté de la surface et de préparer la zone de collage en activant sa surface. Cette étape B est réalisée après la mise en place des rubans adhésifs de protection afin d'éviter toute intervention sur cette zone avant la dépose de colle.

Dans un délai H1-H2 maximum de 3 heures et de préférence de 90 minutes maximum, l'étape C de dépose de colle est initialisée, cette période H1-H2 est déterminée par la durée où le traitement plasma de la surface reste efficace.

De préférence, on dépose la colle par l'intermédiaire d'un dispositif de dépose de cordons de colle, tel que décrit dans la demande de brevet français n° FR 2004 0051648 et ensuite on effectue un lissage desdits cordons de colle déposés. Durant cette étape, un contrôle de température en sortie du dispositif de dépose pourra être effectué, afin de vérifier une température de colle comprise entre 25 et 30°C et, dans le cas d'une colle bi-composants, des contrôles réguliers de ratio durcisseur / résine sont réalisés par tous moyens connus de l'homme du métier tels que par exemple par colorimétrie.

Suite à cette étape C, l'étape D de mise en place de la bande de nappe souple, de marouflage et de mise en place d'un film de protection est lancée rapidement, cette étape D se terminant directement par l'étape de F de mise en pression de la bande collée. Entre H2 de début d'étape C et H4 de début d'étape F, un délai H2-H4 maximum de 45 min est accordé dans le cas d'une colle époxy bi-composante et de 15 min dans le cas d'une colle polyuréthanne.

A H4, débute simultanément l'étape F et l'étape E. Ces deux étapes E et F sont réalisées par un outil commun de mise en pression chauffant, le chauffage étant indépendant de la mise en pression. De cette manière, on peut réaliser un chauffage entre H4-H5 pour une durée de l'ordre de 3h30 et continuer la mise en pression entre H5-H6 pour une durée minimum de 30 minutes. Cela permet ainsi à la colle de refroidir avant l'étape G de retrait de l'outil de mise en pression, de manière à atteindre une viscosité suffisante pour un retrait du dispositif sans conséquence sur le collage de la bande.

Cette étape E est réalisée avec une température de chauffage des bandes collées de l'ordre de 60°C et l'étape F avec une pression de l'ordre de 0,1 bars.

Le procédé qui vient d'être décrit n'est pas limitatif. Il est possible de supprimer éventuellement l'étape de traitement plasma. Par ailleurs, les mêmes paramètres, les étapes et les délais entre les étapes restent valables dans le cas de bandes de nappe souple pré-encollées, mises en place directement sur la zone de collage.

Dans le cas de bandes de nappe souple collées à cheval sur deux supports souples ou rigides adjacents, une étape supplémentaire et non représentée sur la figure 2 est mise en oeuvre entre l'étape D et les étapes simultanées E et F. Ainsi, à l'aide d'un dispositif positionné au niveau de la jonction entre les deux supports et pouvant s'insérer dans ladite jonction et positionné au-dessus de la bande souple et sous le dispositif de mise en pression, on applique une pression continue et suffisante sur la bande de nappe souple, afin de créer une déformation dans ladite bande au niveau de la zone de jonction, cette déformation ayant pour fonction d'absorber les plis qui apparaissent le long de la bande souple, lors du chauffage de celle-ci. Cette disposition est surtout nécessaire pour des bandes de grande longueur telle que par exemple supérieure à 2m.

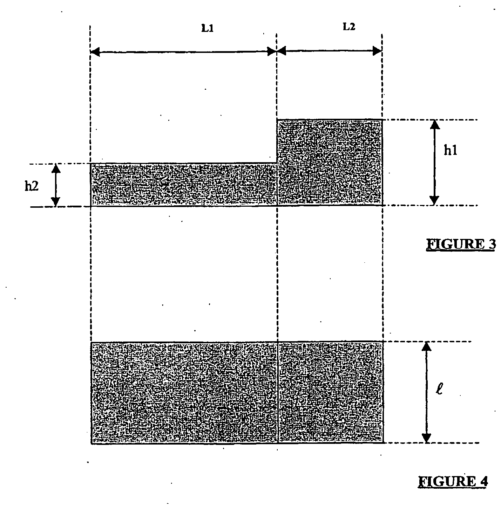

La figure 2 représente les résultats de tests de cisaillement effectués à l'aide des éprouvettes en aluminium représentées sur les figures 3 et 4.

Les dimensions des éprouvettes utilisées sont h1 = 40 mm, h2 = 20 mm, L1 = 85 mm, L2 = 50 et I = 50 mm.

Un échantillon de bande de nappe souple comportant une fine feuille d'aluminium, de l'ordre de 70 microns d'épaisseur, prise en sandwich entre deux tissus de fibres de verre, avec un liant élastomère, par exemple à base de polychloroprène, qui assure la cohésion entre les tissus de verre et l'aluminium est collé sur la partie carrée de 50 mm sur 50 mm de la première éprouvette à l'aide d'une colle polyuréthanne.

De façon similaire, un échantillon de support rigide comprenant une fine feuille d'aluminium de l'ordre de 70 microns d'épaisseur, prise en sandwich entre deux tissus de verre, avec un liant, par exemple à base de polyamide ou de polyester, qui assure la cohésion entre les tissus de verre et l'aluminium est collé sur la partie carrée de 50 mm sur 50 mm de la seconde éprouvette, à l'aide d'une colle polyuréthanne.

Enfin, une couche de colle époxy à deux composants résine et durcisseur avec un ratio durcisseur / résine de 0,55 en masse est appliquée entre la nappe souple et le support rigide.

Les tests ont été effectués à -170°C.

Ils ont été effectués de façon comparative en utilisant les procédés de collage selon l'art antérieur (sans chauffage) et selon l'invention.

Les courbes représentent la probabilité de rupture en fonction de la contrainte en cisaillement appliquée.

La courbe en pointillée représente les résultats d'une éprouvette réalisée selon le procédé de l'art antérieur et la courbe continue représente les résultats d'une éprouvette réalisée selon le procédé de l'invention.

Pour la courbe en pointillée, 100% des ruptures étaient adhésives alors que pour la courbe en continue, 100% des ruptures étaient cohésives. De plus il apparaît clairement que la tenue en cisaillement est plus élevée avec le procédé selon l'invention : on passe de 7,5 MPa à 15 MPa (-170°C).

Ainsi avec le procédé selon l'invention, le collage obtenu présente une meilleure tenue en cisaillement à -170°C et des ruptures cohésives.

Le procédé selon l'invention permet ainsi d'obtenir de meilleurs résultats par rapport aux procédés consistant à d'abord appliquer la pression, puis le chauffage. Si ce type de procédé permet d'accélérer la polymérisation de la colle, il n'améliore pas la tenue de la colle ni les propriétés du collage.

En particulier, l'invention permet de contrôler avec précision la température pendant l'application de la pression, ce qui évite tous risques liés à des variations de températures, susceptibles de se produire in situ pendant les phases de collage (particulièrement en hiver). L'homogénéité du collage en est fortement améliorée.

## Revendications

1. Procédé de collage d'une bande de nappe souple sur au moins un support rigide, constituant une membrane d'étanchéité d'une paroi d'une cuve calorifugée de confinement d'un gaz liquéfié, intégrée dans la structure porteuse d'un navire, ladite nappe et ledit support comprenant chacun au moins une fine feuille métallique continue, collée en sandwich entre deux tissus de fibres de verre, ladite paroi de cuve calorifugée étant formée par assemblage d'une pluralité de panneaux préfabriqués dont chacun comprend une membrane d'étanchéité insérée entre deux barrières thermiquement isolantes, ladite bande de nappe souple assurant la continuité de l'étanchéité de ladite membrane d'étanchéité, au niveau de la jonction entre deux panneaux préfabriqués ;
le procédé comprenant les étapes successives de :
- dépoussiérage de la zone de collage,
- dépose uniforme d'un film de colle polymérisable, sur au moins l'une des deux surfaces à coller de la nappe souple et du support,
- lissage dudit film de colle,
- mise en place de la bande de nappe souple sur le support,
- marouflage de la nappe souple déposée, de manière à éliminer toutes bulles résiduelles,
- mise en place sur ladite nappe souple, d'un film de protection contre les débordements de colle sur le pourtour de ladite nappe souple, ce film de protection étant de dimensions supérieures à celles de la nappe souple, le procédé comprenant ultérieurement :
- une étape de mise sous pression de ladite bande de nappe souple contre le support, au moyen d'une presse, et de chauffage simultané de cette bande pendant au moins une partie de la durée de la mise sous pression,
le procédé étant en outre **caractérisé en ce que** la pression appliquée est comprise entre 50 et 200 mbar, **en ce que** la température de chauffage de la bande collée est comprise entre 50 et 70°C et **en ce que** la durée du chauffage est comprise entre 1 et 7 heures.

2. Procédé de collage selon la revendication 21, **caractérisé en ce que** la pression appliquée est de l'ordre de 100 mbar, **en ce que** la température de chauffage de la bande collée est de l'ordre de 60°C et **en ce que** la durée du chauffage est comprise entre 3 et 4 heures.

3. Procédé de collage selon l'une des revendications précédentes, **caractérisé en ce qu'**après l'étape de dépoussiérage et avant l'étape de dépose de colle, on procède à la mise en place de rubans adhésifs de protection sur le support, autour de la future zone de collage de la bande de nappe souple, afin de protéger ce dernier de tout débordement excessif de colle.

4. Procédé de collage selon l'une des revendications précédentes, **caractérisé en ce que** l'on réalise un traitement plasma de la zone de collage avant l'étape de dépose de colle et après la mise en place des rubans adhésifs de protection lorsque ceux-ci sont utilisés.

5. Procédé de collage selon la revendication 4, **caractérisé en ce que** l'étape de dépose de colle est réalisée dans un délai maximum de 3 heures après le début du traitement plasma.

6. Procédé de collage selon la revendication 5, **caractérisé en ce que** l'étape de dépose de colle est réalisée dans un délai maximum de 90 minutes après le début du traitement plasma.

7. Procédé de collage selon l'une des revendications précédentes, **caractérisé en ce qu'**il est réalisé sous une température ambiante contrôlée, comprise entre 20 et 25°C.

8. Procédé de collage selon l'une des revendications précédentes, **caractérisé en ce qu'**il est réalisé sous une atmosphère contrôlée avec un taux d'humidité relative au maximum de 60%.

9. Procédé de collage selon l'une des revendications précédentes, **caractérisé en ce qu'**il est réalisé en maintenant la température de la colle au moment de son application entre 25 et 30°C.

10. Procédé de collage selon l'une des revendications précédentes, **caractérisé en ce que** lorsque le collage est effectué à l'aide d'une colle époxy bi-composants, l'étape de mise sous pression et de chauffage de la bande de nappe souple est réalisée au maximum 45 minutes après la dépose de ladite colle.

11. Procédé de collage selon l'une des revendications 1 à 9, **caractérisé en ce que** lorsque le collage est effectué à l'aide d'une colle polyuréthanne, l'étape de mise sous pression et de chauffage de la bande de nappe souple est réalisée au maximum 15 minutes après la dépose de ladite colle.

12. Procédé de collage selon l'une des revendications précédentes, **caractérisé en ce que** le chauffage de la bande de nappe souple collée est stoppé au moins 30 minutes avant la fin de la mise sous pression.

13. Procédé de collage selon l'une des revendications précédentes, **caractérisé en ce que** lorsque la bande de nappe souple est appliquée à cheval sur deux supports adjacents, on effectue la mise sous pression en appliquant une pression supplémentaire continue sur la zone de ladite bande située au-dessus de la ligne de jonction entre les deux supports, de façon à créer dans cette zone, une déformation de la bande, qui pénètre dans la zone de jonction et absorbe ainsi les plis apparaissant sur la longueur de ladite bande de nappe souple.

## Patentansprüche

1. Verfahren zum Kleben eines biegsamen Textilstoffstreifens auf zumindest einen starren Träger, der eine Dichtmembran für die Wandung eines wärmeisolierten Sicherheitsbehälters für ein Flüssiggas bildet, der in die Tragstruktur eines Schiffs integriert ist, wobei der Textilstoffstreifen und der Träger jeweils zumindest eine feine kontinuierliche Metallfolie aufweisen, die sandwichartig zwischen zwei Glasfaserbahnen geklebt ist, wobei diese Wandung des wärmeisolierten Behälters durch Zusammenbau mehrerer vorfabrizierter Tafeln gebildet ist, die jeweils eine Dichtungsmembran aufweisen, welche zwischen zwei thermisch isolierende Barrieren eingesetzt ist, wobei der biegsame Textilstoffstreifen die fortgesetzte Dichtigkeit der Dichtmembran bezüglich der Verbindungsstelle zwischen zwei vorfabrizierten Tafeln gewährleistet,
wobei das Verfahren folgende Schritte aufweist:
- Entstauben der Klebezone,
- gleichmäßiges Auftragen eines polymerisierbaren Klebefilms auf zumindest eine der beiden Oberflächen, die mit dem biegsamen Textilstoffstreifen und dem Träger verklebt werden sollen,
- Glätten des Klebefilms,
- Anordnen des Textilstoffstreifens auf dem Träger,
- Aufziehen des aufgebrachten biegsamen Textilstoffstreifens unter Beseitigung sämtlicher restlicher Blasen,
- Anordnen eines Schutzfilms gegen Klebstoffüberstände auf dem gesamten biegsamen Textilstoffstreifen, wobei der Schutzfilm größere Abmessungen besitzt als der biegsame Textilstoffstreifen,
wobei das Verfahren einen anschließenden Schritt umfasst, den biegsamen Textilstoffstreifen auf dem Träger mittels einer Presse zu drücken und gleichzeitig diesen Streifen während zumindest eines Teils der Dauer des Drückens zu erwärmen, ferner **dadurch gekennzeichnet, dass** der ausgeübte Druck zwischen 50 und 200 mbar beträgt, dass die Erwärmungstemperatur des angeklebten Streifens zwischen 50 und 70°C liegt, und dass die Erwärmungsdauer zwischen 1 und 7 Stunden beträgt.

2. Verfahren nach Anspruch 2, **dadurch gekennzeichnet, dass** der ausgeübte Druck in der Größenordnung von 100 mbar beträgt, dass die Erwärmungstemperatur für den angeklebten Streifen in der Größenordnung von 60°C beträgt, und dass die Erwärmungsdauer zwischen 3 und 4 Stunden liegt.

3. Verfahren nach einem der vorangehenden Ansprüche, **dadurch gekennzeichnet, dass** nach dem Entstaubungsschritt und vor dem Auftragen des Klebstoffs auf den Träger Schutzhaftstreifen um die zukünftige Klebezone des biegsamen Textilstoffstreifens angeordnet werden, um diesen vor jeglichen Klebstoffüberstand zu schützen.

4. Verfahren nach einem der vorangehenden Ansprüche, **dadurch gekennzeichnet, dass** die Klebezone vor dem Auftragen des Klebstoffs sowie nach dem Anbringen der Schutzhaftstreifen, sofern diese zum Einsatz kommen, einer Plasmabehandlung unterzogen wird.

5. Verfahren nach Anspruch 4, **dadurch gekennzeichnet, dass** der Schritt zum Auftragen des Klebstoffs mit einer maximalen Verzögerung von 3 Stunden nach Beginn der Plasmabehandlung ausgeführt wird.

6. Verfahren nach Anspruch 5, **dadurch gekennzeichnet, dass** der Schritt zum Auftragen des Klebstoffs mit einer maximalen Verzögerung von 90 Minuten nach Beginn der Plasmabehandlung ausgeführt wird.

7. Verfahren nach einem der vorangehenden Ansprüche, **dadurch gekennzeichnet, dass** es unter einer kontrollierten Umgebungstemperatur zwischen 20 und 25°C ausgeführt wird.

8. Verfahren nach einem der vorangehenden Ansprüche, **dadurch gekennzeichnet, dass** es unter einer kontrollierten Atmosphäre mit einer relativen Feuchtigkeit von maximal 60% ausgeführt wird.

9. Verfahren nach einem der vorangehenden Ansprüche, **dadurch gekennzeichnet, dass** es unter Aufrechterhalten der Temperatur des Klebstoffs zum Zeitpunkt seiner Auftragung zwischen 25 und 30°C ausgeführt wird.

10. Verfahren nach einem der vorangehenden Ansprüche, **dadurch gekennzeichnet, dass**, wenn die Verklebung mit Hilfe eines Epoxidharz-Zweikomponentenklebstoffs ausgeführt wird, der Schritt zum Drücken und zum Erwärmen des biegsamen Textilstoffstreifens maximal 45 Minuten nach dem Auftragen des Klebstoffs ausgeführt wird.

11. Verfahren nach einem der Ansprüche 1 bis 9, **dadurch gekennzeichnet, dass** die Verklebung mit Hilfe eines Polyurethan-Klebstoffs ausgeführt wird, wobei der Schritt zum Drücken und zum Erwärmen des biegsamen Textilstoffstreifens maximal 15 Minuten nach dem Auftragen des Klebstoffs ausgeführt wird.

12. Verfahren nach einem der vorangehenden Ansprüche, **dadurch gekennzeichnet, dass** das Erwärmen des biegsamen Textilstoffstreifens mindestens 30 Minuten vor Beendigung des Drückens gestoppt wird.

13. Verfahren nach einem der vorangehenden Ansprüche, **dadurch gekennzeichnet, dass** das Drücken durch Aufbringen eines kontinuierlichen zusätzlichen Drucks auf diejenige Zone des Streifens erfolgt, welche über der Verbindungslinie zwischen den beiden Trägern zu liegen kommt, wenn der biegsame Textilstoffstreifen rittlings auf zwei benachbarten Träger angebracht ist, um in dieser Zone eine Verformung des Streifens zu erzeugen, der in die Verbindungszone eintritt, wodurch Falten absorbiert werden, die über der Länge des biegsamen Textilstoffstreifens auftreten.

## Claims

1. A method of bonding a strip of flexible sheet on at least one rigid support, constituting a sealing membrane of a wall of a lagged tank for confining a liquefied gas integrated in the load-carrying structure of a ship, said sheet and said support each comprising at least one fine continuous metal foil sandwiched between two glass fiber fabrics, said wall of a lagged tank being formed by assembling together a plurality of prefabricated panels, each comprising a sealing membrane inserted between two thermally-insulating barriers, wherein said strip of flexible sheet provides continuity of sealing for said sealing membrane at the junction between two prefabricated panels, the method comprising the following successive steps:
- de-dusting the bonding zone;
- depositing a uniform film of polymerizable adhesive on at least one of the two surfaces of the flexible sheet and of the support that are to be bonded together;
- smoothing said film of adhesive;
- placing the strip of flexible sheet on the support;
- roller-pressing the deposited flexible sheet so as to eliminate any residual bubbles; and
- placing on said flexible sheet a film to provide protection against adhesive overflowing around said flexible sheet, the protective film being of dimensions greater than those of the flexible sheet;
the method including a subsequent step of pressing said strip of flexible sheet against the support by means of a press, and of simultaneously heating said strip during at least a portion of the duration for which pressure is applied,
the method of bonding being further **characterized in that** the pressure applied lies in the range from 50 mbar to 200 mbar, **in that** the temperature to which the bonded strip is raised lies in the range from 50°C to 70°C, and **in that** the duration of the heating lies in the range from 1 h to 7 h.

2. A method of bonding according to claim 1, **characterized in that** the pressure applied is about 100 mbar, **in that** the temperature to which the bonded strip is heated is about 60°C, and **in that** the duration of heating lies in the range 3 h to 4 h.

3. A method of bonding according to any preceding claim, **characterized in that** after the pre-dusting step and before the step of depositing the adhesive, protective adhesive tapes are put into place on the support around the future zone for bonding to the strip of flexible sheet, in order to protect the support from any excessive overflow of adhesive.

4. A method of bonding according to any preceding claim, **characterized in that** the bonding zone is subjected to plasma treatment prior to the step of depositing adhesive and after the protective adhesive tapes have been put into place, if such tapes are used.

5. A method of bonding according to claim 4, **characterized in that** the step of depositing adhesive is performed within a maximum period of 3 h after the beginning of the plasma treatment.

6. A method of bonding according to claim 5, **characterized in that** the step of depositing adhesive is performed within a maximum period of 90 min after the beginning of the plasma treatment.

7. A method of bonding according to any preceding claim, **characterized in that** it is performed under controlled ambient temperature lying in the range 20°C to 25°C.

8. A method of bonding according to any preceding claim, **characterized in that** it is performed in a controlled atmosphere in which relative humidity is no more than 60%.

9. A method of bonding according to any preceding claim, **characterized in that** it is performed while maintaining the temperature of the adhesive at the moment of its application in the range 25°C to 30°C.

10. A method of bonding according to any preceding claim, **characterized in that** when the bonding is performed using a two-component epoxy adhesive, the step of applying pressure and of heating the strip of flexible sheet is performed no more than 45 min after said adhesive has been deposited.

11. A method of bonding according to any one of claims 1 to 9, **characterized in that** when the bonding is performed using a polyurethane adhesive, the step of applying pressure and heating the strip of flexible sheet is performed no more than 15 min after said adhesive has been deposited.

12. A method of bonding according to any preceding claim, **characterized in that** the heating of the bonded strip of flexible sheet is stopped at least 30 min before ceasing to apply pressure.

13. A method of bonding according to according to any preceding claim, **characterized in that** when the strip of flexible sheet is applied over two adjacent supports, pressure is applied while applying additional continuous pressure on the zone of said strip that is situated over the junction line between the two supports, so as to create in said line a deformation of the strip that penetrates into the junction zone and thus absorbs the wrinkles that appear over the length of said strip of flexible sheet.
